# EUROPEAN PATENT SPECIFICATION

(11) **EP 1 908 854 B1**
(45) Date of publication and mention of the grant of the patent: **19.10.2011**
(21) Application number: 07121127.0
(22) Date of filing: 20.02.2004
(51) Int. Cl.: C22C 19/05, H01M 8/10, H01M 8/24, H01M 8/02

(54) **Nickel-base alloys**
Legierungen auf Nickelbasis
Alliages à base de nickel

(30) Priority: 21.02.2003 JP 2003044416; 21.02.2003 JP 2003044417; 04.02.2004 JP 2004027444
(43) Date of publication of application: 09.04.2008
(62) Divisional of application: 04713189.1
(73) Proprietor: MITSUBISHI MATERIALS CORPORATION, Chiyoda-ku, Tokyo 100-8117 (JP)
(72) Inventor: Sugahara, Katsuo, c/o Mitsubishi Materials Corporation, 476, Shimoishidoshimo, Kitamoto-shi, Saitama 364-0023 (JP)
(74) Representative: Gille Hrabal Struck Neidlein Prop Roos

(56) References cited:
- WO-A-03/057933
- PATENT ABSTRACTS OF JAPAN vol. 1998, no. 01, 30 January 1998 (1998-01-30) -& JP 09 256087 A (MITSUBISHI MATERIALS CORP), 30 September 1997 (1997-09-30)
- PATENT ABSTRACTS OF JAPAN vol. 2003, no. 10, 8 October 2003 (2003-10-08) -& JP 2003 173792 A (MITSUBISHI MATERIALS CORP), 20 June 2003 (2003-06-20)
- PATENT ABSTRACTS OF JAPAN vol. 2003, no. 12, 5 December 2003 (2003-12-05) -& JP 2005 317479 A (DAIDO STEEL CO LTD), 10 November 2005 (2005-11-10)
- PATENT ABSTRACTS OF JAPAN vol. 1995, no. 07, 31 August 1995 (1995-08-31) -& JP 07 090440 A (SUMITOMO SPECIAL METALS CO LTD), 4 April 1995 (1995-04-04)

## Description

### TECHNICAL FIELD

### Field of the Invention

The present invention relates to polymer electrolyte fuel cells. Priority is claimed on Japanese Patent Application No. 2003-44416, Japanese Patent Application No. 2003-44417 and Japanese Patent Application No. 2004-27444, the contents of which are incorporated herein by reference.

### BACKGROUND ART

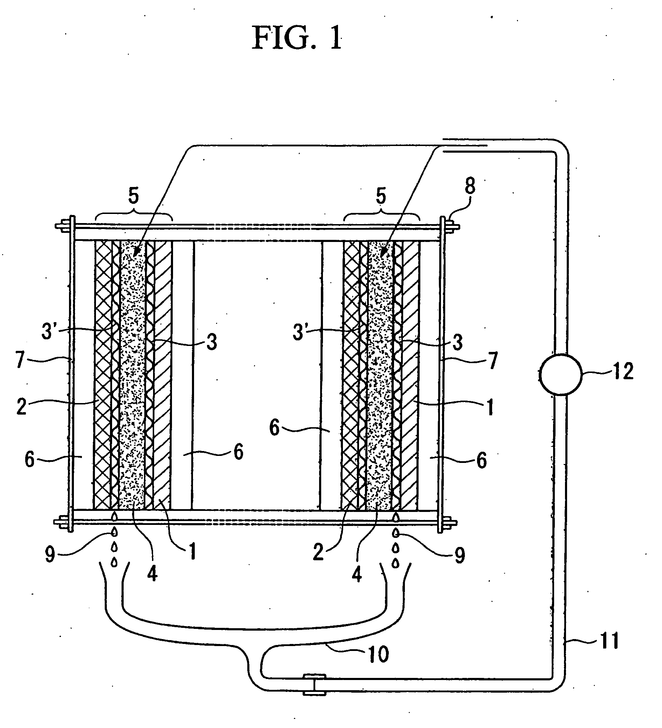

Polymer electrolyte fuel cells which operate at low temperatures ranging from room temperature to 80°C can be built to compact dimensions and thus are expected to be used in automotive and portable fields. Development work on such fuel cells is proceeding rapidly. FIG. 1 schematically shows the construction of such a polymer electrolyte fuel cell, which includes hydrogen electrodes 1, oxygen electrodes 2, first platinum catalysts 3 and second platinum catalysts 3', solid electrolyte membranes (proton exchange membrane) 4, and unit cells 5. Each unit cell 5 has a solid electrolyte membrane 4, on either side of which is provided a first platinum catalyst 3 and a second platinum catalyst 3'. A hydrogen electrode I is provided outside of the first platinum catalyst 3, and an oxygen electrode 2 is provided outside of the second platinum catalyst 3'. In order to stack these unit cells 5 together with intervening separators 6 to form the polymer electrolyte fuel cell, a plurality of unit cells 5 are stacked with separators 6 therebetween by using at least two support plates 7 and fasteners 8 such as bolts and nuts.

Power generation principle within a unit cell 5 of the polymer electrolyte fuel cell having this type of construction takes place as follows. Hydrogen obtained from natural gas, methanol or the like is supplied to the hydrogen electrode 1, where the first platinum catalyst 3 on the hydrogen electrode 1 side is used to decompose the hydrogen into hydrogen ions and electrons. The electrons are led out as electricity to the exterior, flow through an external load circuit (not shown), and reach the oxygen electrode 2. The hydrogen ions pass through a solid electrolyte membrane 4 composed of a polymer electrolyte -type ion-exchange membrane that allows only hydrogen ions to pass through, and migrate to the oxygen electrode 2 side. On the oxygen electrode 2 side, the hydrogen ions, electrons and oxygen react under the influence of the second platinum catalyst 3' to form water. The role of the solid electrolyte membrane 4 is to allow hydrogen gas to pass through as hydrogen ions, for which it needs to be wet. Because the hydrogen ions, electrons and oxygen react to form water on the oxygen electrode 2 side, keeping the solid electrolyte membrane 4 wet is not a problem. However, the hydrogen electrode I side which is separated from the oxygen electrode 2 side by the solid electrolyte membrane 4 is not in this way supplied with water and thus ends up dry. Hence, to ensure the wetness of the solid electrolyte membrane 4 on the hydrogen electrode 1 side, water 9 discharged from the oxygen electrode 2 side is received by a manifold 10, passed through a pipe 11, and supplied with the aid of a pump 12 to the solid electrolyte membrane 4 on the hydrogen electrode 1 side.

As just described, the water 9 discharged from the oxygen electrode 2 side is received by the manifold 10, passed through the pipe 11, and fed by means of a pump 12 to the solid electrolyte membrane 4 on the hydrogen electrode 1 side, thereby ensuring the wetness of the solid electrolyte membrane 4 on the hydrogen electrode 1 side. However, because the solid electrolyte membrane 4 used in polymer electrolyte fuel cells generally has been administered sulfonation treatment, the water 9 discharged from the oxygen electrode 2 side has sulfonic acid acidity and is thus mildly corrosive. Hence, there is a need for the manifolds 10 and pipes 11 which receive water 9 to be corrosion resistant.

In some cases, the solid electrolyte membranes used in polymer electrolyte fuel cells have been subjected to fluorination rather that sulfonation treatment. The water 9 discharged from the oxygen electrode 2 side will as a result have hydrofluoric acid acidity. In such cases, there will similarly be a need for the manifolds 10 and pipes 11 which receive water 9 to be corrosion resistant.

In addition, throughholes (not shown) are provided in the hydrogen electrode I and the oxygen electrode 2. The sulfonic acid acidic or hydrofluoric acid acidic water 9 that is discharged from the oxygen electrode 2 side passes through the throughholes (not shown) and comes into contact with the separator 6. Moreover, the sulfonic acid acidic or hydrofluoric acid acidic water 9 that is discharged from the oxygen electrode 2 side, recirculated, and reaches the hydrogen electrode 1 side also passes through the throughholes (not shown) and comes into contact with the separator 6. Hence, corrosion resistance is required also of the separators 6.

These components such as manifolds 10, pipes 11 and separators 6 that require corrosion resistance are generally made of a stainless steel such as SUS316L. In addition, the sulfuric acid acidic or hydrofluoric acid acidic water produced on the oxygen electrode 2 side disperses and settles on the support plates 7, fasteners 8 such as bolts and nuts, and the like, corrode these as well. Therefore, stainless steels such as SUS316L are also used in the support plates 7 and fasteners 8 such as bolts and nuts. That is, stainless steels such as SUS316L are known to be used in the structural members, excluding unit cells 5, for assembling polymer electrolyte fuel cells, such as support plates 7, fasteners 8, manifolds 10, pipes 11 and separators 6 (collectively referred to hereinafter as "structural members for polymer electrolyte fuel cells") (see, for example, JP-A No. 2001-6714, JP-A No. 2000-299121, JP-A No. 2000-331696 and the like).

A metallic material for fused carbonate fuel cell containing 15-35 wt%, of Cr is disclosed in JP-A 7090440.

At a corrosion rate of less than 0.1 mm/year, structural members for polymer electrolyte fuel cells are generally rated as "excellent" and the corrosion resistance of the stainless steel is also generally rated as "excellent." However, a elution amount of metal ions from stainless steel is large. Such metal ions that have leached from the stainless steel degrade the solid electrolyte membrane, which can dramatically shorten the life of the polymer electrolyte fuel cell. Accordingly, there has existed a desire for the development of metal materials that undergo very little leaching of metal ions.

### DISCLOSURE OF INVENTION

It is therefore an object of the present invention to provide structural members for forming polymer electrolyte fuel cells, which structural members are composed of a nickel-base alloy that undergoes very little leaching of ions in the polymer electrolyte fuel cell environment wherein the environment is used when stacking unit cells of the polymer electrolyte fuel cells for forming assembly.

As a result of extensive investigations conducted on ways of obtaining metal materials that undergo very little leaching of metal ions in an environment for forming a polymer electrolyte fuel cell, we have discovered nickel-base alloys which include at least 43% and not more than 50% of chromium. The nickel-base alloys include 0.1 to 2% molybdenum, 0.001 to 0.05% magnesium, 0.001 to 0.04% nitrogen and 0.05 to 0.5% manganese, and which optionally may include one or both 0.05 to 1.0% iron and 0.01 to 0.1% silicon. The balance of the nickel-base alloys is nickel and unavoidable inadvertent impurities. The nickel-base alloys which moreover have a composition wherein the carbon contained as inadvertent impurities is set to 0.05% or less have a corrosion rate of less than 0.1 mm/year in the environment for forming a polymer electrolyte fuel cell. The nickel-base alloys achieve very little leaching of ions in the environment for forming a polymer electrolyte fuel cell. We have thus learned that these nickel-base alloys have effects, in structural members for forming the polymer electrolyte fuel cells, that are even better than those of prior-art materials such as stainless steels.

The invention is based on these findings.
The invention provides as an aspect (1) a polymer electrolyte fuel cell including a structural member, wherein the structural member is made of
a nickel-base alloy comprising, by mass, more than 43% and not more than 50% chromium, 0.1 to 2% molybdenum, 0.001 to 0.05% magnesium, 0.001 to 0.04% nitrogen, 0.05 to 0.5% manganese, and optionally one or both of iron and silicon in an amount of 0.05 to 1.0 % iron and 0.01 to 0.1 % silicon,
with the balance being nickel and inadvertent impurities, the amount of carbon included in the alloy as inadvertent impurities being not more than 0.05%.

Because the nickel-base alloys undergo very little leaching of ions in the environment for forming a polymer electrolyte fuel cell, they are particularly effective as structural members for the assembly of polymer electrolyte fuel cells, such as support plates 7, fasteners 8, manifolds 10, pipes 11 and separators 6.

Accordingly, the following aspects are also provided.
(2) The polymer electrolyte fuel cell according to aspect (1), wherein the nickel-alloy comprises one or both of iron and silicon in an amount of 0.05 to 1.0 % iron and 0.01 to 0.1 % silicon.
(3) The polymer electrolyte fuel cell according to aspect (1) or (2), wherein the structural member is a manifold member.
(4) The polymer electrolyte fuel cell according to aspect (1) or (2), wherein the structural member is a pipe member.
(5) The polymer electrolyte fuel cell according to aspect (1) or (2), wherein the structural member is a fastener member.
(6) The polymer electrolyte fuel cell according to aspect (1) or (2), wherein the structural member is a support plate member.
(7) The polymer electrolyte fuel cell according to aspect (1) or (2), wherein the structural member is a separator member.
(8) The polymer electrolyte fuel cell according to any of the aspects (1) to (7), wherein
   (i) the polymer electrolyte fuel cell comprises plural unit cells which have a solid electrolyte membrane, a first platinum catalyst, a second platinum catalyst, a hydrogen electrode and an oxygen electrode;
   (ii) the first platinum catalyst is provided on one side of the solid electrolyte membrane and the second platinum catalyst is provided on the other side of the solid electrolyte membrane; and
   (iii) the hydrogen electrode is provided outside of the first platinum catalyst, and the oxygen electrode is provided outside of the second platinum catalyst.
(9) The polymer electrolyte fuel cell according to aspect (8), wherein the solid electrolyte membrane is a membrane wherein sulfonation treatment or fluorination treatment is conducted.
(10) The polymer electrolyte fuel cell according to aspect (8), wherein the fuel cell further comprises a manifold, which receives water generated on the oxygen electrode side of the solid electrolyte membrane, a pipe which passes the water from the manifold to a pump, and the pump which feeds the received water to the hydrogen electrode side of the solid electrolyte membrane.
(11) The polymer electrolyte fuel cell according to aspect (8), wherein the plural cell units are stacked together with intervening separators, and a support plate and fasteners are also used for stacking the unit cells.
(12) Use of a nickel-base alloy comprising, by mass, more than 43% and not more than 50% chromium, 0.1 to 2% molybdenum, 0.001 to 0.05% magnesium, 0.001 to 0.04% nitrogen, and 0.05 to 0.5% manganese, and optionally one or both of iron and silicon in an amount of 0.05 to 1.0 % iron and 0.01 to 0.1 % silicon,
   with the balance being nickel and inadvertent impurities, the amount of carbon included in the alloy as inadvertent impurities being not more than 0.05%, and
   for a member of a polymer electrolyte fuel cell.
(13) The use of aspect 12, wherein the nickel-base alloy comprises one or both of iron and silicon in an amount of 0.05 to 1.0 % iron and 0.01 to 0.1 % silicon.

### BRIEF DESCRIPTION OF THE DIAGRAMS

FIG. 1 is a schematic view showing the construction of a polymer electrolyte fuel cell.

### BEST MODE FOR CARRYING OUT THE INVENTION

Limits for each element in the compositions of the nickel-base alloys which undergo very little leaching of ions in the environment for forming a polymer electrolyte fuel cell are explained below in detail.

### Chromium:

In an environment for forming a polymer electrolyte fuel cell containing a trace amount of sulfuric acid, chromium is effective for suppressing the leaching of metal ions. In such cases, the presence of more than 43% is required, but machining becomes difficult at a level of more than 50%. Accordingly, the chromium present in the nickel-base alloy of this invention has been set to more than 43% and not more than 50%. A chromium content of 43.1 to 47% is preferred.

### Molybdenum:

Molybdenum has the effect in particular of suppressing an increase in the leaching of metal ions when the sulfuric acid concentration rises within an environment for forming a polymer electrolyte fuel cell containing a trace amount of sulfuric acid. It is effective when present in a concentration of at least 0.1%, but at a concentration of more than 2%, the phase stability deteriorates, discouraging entry of the Cr-bcc phase into solid solution. As a result, microcells form between the Ni-fcc phase serving as the parent phase and the Cr-bcc phase, resulting in an increase in the leaching of metal ions. Accordingly, the molybdenum content in the nickel-base alloy of this invention has been set at 0.1 to 2%. A range of more than 0.1% but less than 0.5% is preferred. Nitrogen, Manganese and Magnesium:

The presence of nitrogen, manganese and magnesium serves to improve the phase stability. That is, nitrogen, manganese and magnesium stabilize the Ni-fcc phase which is the matrix, thus promoting the entry of chromium into a solid solution and discouraging the deposition of a second phase. However, at a nitrogen content of less than 0.001%, there is no phase stabilizing effect. On the other hand, when more than 0.04% is present, nitrides form and the leaching of metal ions in the environment for forming a polymer electrolyte fuel cell increases. Hence, the nitrogen content has been set at 0.001 to 0.04%, and preferably 0.005 to 0.03%.

Likewise, at a manganese content of less than 0.05%, there is no phase stabilizing effect, whereas the presence of more than 0.5% increases the leaching of metal ions in an environment for forming a polymer electrolyte fuel cell. Hence, the manganese content has been set at 0.05 to 0.5%, and preferably 0.1 to 0.4%.

Similarly, at a magnesium content of less than 0.001%, there is no phase stabilizing effect, whereas the presence of more than 0.05% increases the leaching of metal ions in an environment for forming a polymer electrolyte fuel cell. Hence, the magnesium content has been set at 0.001 to 0.05%, and preferably 0.002 to 0.04%. Iron and Silicon:
Iron and silicon have strength-enhancing effects and are thus added as optional ingredients. Iron is effective at a content of 0.05% or more, but when present at above 1%, the leaching of metal ions in an environment for forming a polymer electrolyte fuel cell increases. Hence, the iron content has been set at 0.05 to 1%, and preferably at least 0.1% but less than 0.5%.

Similarly, silicon is effective at a content of 0.01% or more, but when present at above 0.1%, the leaching of metal ions in an environment for forming a polymer electrolyte fuel cell increases. Hence, the silicon content has been set at 0.01 to 0.1%, and preferably 0.02 to 0.05%.

### Carbon:

Carbon is present as an inadvertent impurity. Carbon forms a carbide with chromium in the vicinity of crystal grain boundaries, increasing the leaching of metal ions. Therefore, the lower the carbon content the better. Hence, the upper limit in the carbon content present among inadvertent impurities has been set at 0.05%. A carbon content of 0% is preferred. The carbon content may be substantially from 0.001 to 0.05%.

### EXAMPLES

In each example, low carbon-content starting materials were prepared. These starting materials were melted and cast in an ordinary high-frequency induction furnace, thereby producing 12 mm thick ingots of the ingredient compositions shown in Tables 1 to 3. These ingots were subjected to homogenizing heat treatment at 1230°C for 10 hours. Next, while maintaining the temperature within a range of 1000 to 1230°C, the ingots were reduced to a final thickness of 5 mm by hot rolling at a thickness reduction rate of 1 mm per pass. The resulting plates were then subjected to solution heat treatment in which they were held at 1200°C for 30 minutes then water quenched. Next, the surfaces were buffed, giving nickel-base alloy plates 1 to 20 according to the invention (Examples) and comparative nickel-base alloy plates 1 to 10 (Comparative Examples) having the ingredient compositions shown in Tables 1 to 3.

In a similar process, low carbon-content starting materials were melted and cast in an ordinary high-frequency melting furnace, thereby producing 5 mm thick precision-cast ingots of the ingredient compositions shown in Table 2. These ingots were subjected to homogenizing heat treatment at 1230°C for 10 hours, then were water quenched. This procedure yielded a nickel-base alloy plate 21 according to the invention (Example).

A prior-art alloy plate 1 (Prior-Art Example) made of SUS304 stainless steel and having a thickness of 5 mm and a prior-art alloy plate 2 (Prior-Art Example) made of SUS316L stainless steel and of the same thickness were also prepared.

These inventive nickel-base alloy plates 1 to 20 (Examples), comparative nickel-base alloy plates 1 to 10 (Comparative Examples) and prior-art alloy plates 1 and 2 (Prior-Art Examples) were each cut into test pieces having a length of 10 mm and a width of 50 mm. The test pieces were surface polished by finishing with waterproof emery paper #400, following which they were ultrasonically degreased in acetone for five minutes.

A 1,000 ppm H₂SO₄ solution and a 500 ppm H₂SO₄ solution were prepared as test solutions which simulate the sulfuric acid acidic water that forms in the environment for forming a polymer electrolyte fuel cell. A 500 ppm HF solution and a 50 ppm HF solution were also prepared as test solutions which simulate the hydrofluoric acid acidic water that forms in the environment for forming a polymer electrolyte fuel cell. In addition, polypropylene test containers were prepared for use.

The test pieces from inventive nickel-base alloy plates 1 to 20 (Examples), comparative nickel-base alloy plates 1 to 10 (Comparative Examples) and prior-art alloy plates 1 and 2 (Prior-Art Examples) were individually placed, together with 200 ml portions of the test solutions prepared above, in the polypropylene test containers. These were then vacuum degassed in a glove box, and sealed by closure with a lid within a hydrogen atmosphere. These sealed polypropylene test containers were placed in a test chamber set at 80°C and held therein for 500 hours.

The polypropylene test containers were subsequently removed and cooled, following which the elements that leached out into the H₂SO₄ solutions and the HF solutions were quantitatively determined by inductively coupled plasma emission spectroscopy, and the total amount of metal ions that leached from each test piece was measured. This total amount of leached metal ions was divided by the surface area of the test piece to give the amount of leached metal ions per unit surface area. The results are shown in Tables 1 to 3.

**Table 1**

| Ni-base alloy | Ingredient composition (wt %) | | | | | | | | | Amount of metal ions leached by 1,000 ppm H₂SO₄ solution (ppm/cm²) | Amount of metal ions leached by 500 ppm H₂SO₄ solution (ppm/cm²) | Amount of metal ion leached by 500 ppm HF solution (ppm/cm²) | Amount of metal ion leached by 50 ppm HF solution (ppm/cm²) |
|---|---|---|---|---|---|---|---|---|---|---|---|---|---|
| | Cr | Mo | Mg | N | Mn | Fe | Si | C# | Ni and inadvertent impurities | | | | |
| EX 1 | 44.0 | 0.90 | 0.011 | 0.017 | 0.06 | 0.10 | 0.04 | 0.02 | balance | 0.25 | 0.09 | 0.90 | 0.32 |
| EX 2 | 43.2 | 0.28 | 0.039 | 0.006 | 0.18 | -- | -- | 0.02 | balance | 0.31 | 0.11 | 1.12 | 0.40 |
| EX 3 | 49.8 | 0.41 | 0.030 | 0.009 | 0.10 | -- | - | 0.03 | balance | 0.10 | 0.07 | 0.37 | 0.13 |
| EX 4 | 45.1 | 0.11 | 0.022 | 0.017 | 0.22 | -- | -- | 0.02 | balance | 0.20 | 0.06 | 0.71 | 0.25 |
| EX 5 | 43.1 | 1.99 | 0.026 | 0.010 | 0.08 | -- | -- | 0.02 | balance | 0.34 | 0.12 | 1.17 | 0.42 |
| EX 6 | 45.1 | 0.41 | 0.034 | 0.011 | 0.07 | -- | -- | 0.01 | balance | 0.20 | 0.06 | 0.72 | 0.25 |
| EX 7 | 43.5 | 0.32 | 0.038 | 0.002 | 0.11 | -- | -- | 0.02 | balance | 0.29 | 0.10 | 1.05 | 0.37 |
| EX 8 | 44.1 | 0.32 | 0.037 | 0.038 | 0.10 | -- | - | 0.02 | balance | 0.25 | 0.09 | 0.90 | 0.31 |
| EX 9 | 46.0 | 0.42 | 0.002 | 0.018 | 0.05 | -- | - | 0.02 | balance | 0.16 | 0.12 | 0.62 | 0.21 |
| EX 10 | 44.6 | 0.44 | 0.049 | 0.020 | 0.48 | -- | -- | 0.01 | balance | 0.23 | 0.09 | 0.81 | 0.28 |
| EX 11 | 45.1 | 0.43 | 0.034 | 0.014 | 0.10 | 0.05 | -- | 0.02 | balance | 0.20 | 0.06 | 0.73 | 0.25 |
| EX 12 | 42.9 | 0.42 | 0.014 | 0.007 | 0.19 | 0.99 | -- | 0.02 | balance | 0.34 | 0.12 | 1.29 | 0.44 |
| EX 13 | 44.0 | 0.43 | 0.015 | 0.018 | 0.14 | -- | 0.01 | 0.02 | balance | 0.25 | 0.09 | 0.94 | 0.32 |
| EX 14 | 43.7 | 0.41 | 0.027 | 0.018 | 0.09 | -- | 0.09 | 0.02 | balance | 0.27 | 0.10 | 1.02 | 0.35 |

| | | | | | | | | | | | | | |
|---|---|---|---|---|---|---|---|---|---|---|---|---|---|
| C# indicates the amount of carbon included as inadvertent impurities. | | | | | | | | | | | | | |

**Table 2**

| Ni-base alloy | Ingredient composition (wt %) | | | | | | | | | Amount of metal ions leached by 1,000 ppm H₂SO₄ solution (ppm/cm²) | Amount of metal ions leached by 500 ppm H₂SO₄ solution (ppm/cm²) | Amount of metal ion leached by 500 ppm HF solution (ppm/cm²) | Amount of metal ion leached by 50 ppm HF solution (ppm/cm²) |
|---|---|---|---|---|---|---|---|---|---|---|---|---|---|
| | Cr | Mo | Mg | N | Mn | Fe | Si | C# | Ni and inadvertent impurities | | | | |
| EX 15 | 43.1 | 0.42 | 0.036 | 0.027 | 0.14 | -- | -- | 0.03 | balance | 0.32 | 0.12 | 1.22 | 0.42 |
| EX 16 | 46.3 | 0.34 | 0.026 | 0.010 | 0.26 | -- | -- | 0.02 | balance | 0.16 | 0.06 | 0.60 | 0.20 |
| EX 17 | 44.1 | 0.42 | 0.008 | 0.016 | 0.22 | 0.18 | 0.04 | 0.02 | balance | 0.24 | 0.09 | 0.93 | 0.31 |
| EX 18 | 46.0 | 0.42 | 0.034 | 0.005 | 0.21 | 0.11 | 0.05 | 0.02 | balance | 0.18 | 0.07 | 0.64 | 0.21 |
| EX 19 | 44.6 | 0.32 | 0.029 | 0.022 | 0.18 | 0.26 | 0.03 | 0.02 | balance | 0.25 | 0.08 | 0.83 | 0.28 |
| EX 20 | 43.5 | 0.44 | 0.005 | 0.021 | 0.09 | 0.13 | 0.02 | 0.02 | balance | 0.29 | 0.10 | 1.10 | 0.38 |
| EX 21 | 44.4 | 0.43 | 0.023 | 0.022 | 0.31 | -- | -- | 0.01 | balance | 0.22 | 0.08 | 0.88 | 0.29 |
| CE 1 | 42.5* | 0.51 | 0.014 | 0.031 | 0.22 | -- | -- | 0.02 | balance | 4.11 | 1.45 | 3.04 | 1.12 |
| CE 2 | 50.4* | 0.54 | 0.033 | 0.034 | 0.27 | -- | -- | 0.02 | balance | cracks arose during test piece fabrication | | | |
| CE 3 | 44.4 | --* | 0.026 | 0.033 | 0.32 | -- | -- | 0.02 | balance | 3.21 | 0.55 | 3.25 | 0.16 |
| CE 4 | 44.8 | 2.3* | 0.034 | 0.024 | 0.25 | -- | -- | 0.03 | balance | cracks arose during test piece fabrication | | | |
| CE 5 | 45.6 | 0.85 | --* | 0.013 | 0.27 | -- | -- | 0.02 | balance | cracks arose during test piece fabrication | | | |
| CE 6 | 45.4 | 0.61 | 0.058* | 0.015 | 0.20 | -- | -- | 0.02 | balance | 3.33 | 1.23 | 3.72 | 1.23 |
| CE 7 | 45.3 | 0.44 | 0.037 | --* | 0.07 | -- | -- | 0.02 | balance | cracks arose during test piece fabrication | | | |

| | | | | | | | | | | | | | |
|---|---|---|---|---|---|---|---|---|---|---|---|---|---|
| *An asterisk indicates a value outside the compositional range of the invention. C# indicates the amount of carbon included as inadvertent impurities. | | | | | | | | | | | | | |

**Table 3**

| Ni-base alloy | Ingredient composition (wt %) | | | | | | | | | Amount of metal ions leached by 1,000 ppm H₂SO₄ solution (ppm/cm²) | Amount of metal ions leached by 500 ppm H₂SO₄ solution (ppm/cm²) | Amount of metal ion leached by 500 ppm HF solution (ppm/cm²) | Amount of metal ion leached by 50 ppm HF solution (ppm/cm²) |
|---|---|---|---|---|---|---|---|---|---|---|---|---|---|
| | Cr | Mo | Mg | N | Mn | Fe | Si | C# | Ni and inadvertent impurities | | | | |
| CE 8 | 44.2 | 0.68 | 0.032 | 0.045* | 0.16 | -- | -- | 0.02 | balance | 3.26 | 1.56 | 3.01 | 1.05 |
| CE 9 | 46.1 | 0.46 | 0.035 | 0.019 | 0.04* | -- | -- | 0.01 | balance | cracks arose during test piece fabrication | | | |
| CE 10 | 44.7 | 0.59 | 0.034 | 0.026 | 0.55* | -- | -- | 0.02 | balance | 3.42 | 1.84 | 3.45 | 1.88 |
| Prior-Art Example 1 | SUS304 | | | | | | | | | 56.2 | 19.8 | 72.1 | 18.8 |
| Prior-Art Example 2 | SUS316L | | | | | | | | | 33.3 | 10.2 | 36.8 | 9.4 |

| | | | | | | | | | | | | | |
|---|---|---|---|---|---|---|---|---|---|---|---|---|---|
| *An asterisk indicates a value outside the compositional range of the invention. C# indicates the amount of carbon included as inadvertent impurities. | | | | | | | | | | | | | |

As is apparent from the results shown in Tables 1 to 3, the nickel-base alloy plates in Examples 1 to 21 according to the invention have much lower amounts of metal ion leached per unit surface area of the test pieces than the alloy plates 1 and 2 in Prior-Art Examples 1 and 2. The test pieces from the nickel-base alloy plates in Comparative Examples 1 to 10, which fall outside the scope of this invention, either had somewhat high amounts of metal ions leached or gave rise in most cases to cracks during machining of the test plates.

### INDUSTRIAL APPLICABILITY

The nickel-base alloys described in this application undergo very little leaching of metal ions in an environment for forming a polymer electrolyte fuel cell. Therefore, by assembling polymer electrolyte fuel cells using components made of these nickel-base alloys, deterioration of the solid electrolyte membrane can be suppressed, enabling polymer electrolyte fuel cells with a longer lifetime to be achieved. This invention will thus be of great industrial benefit.

As noted above, the nickel-base alloys are most effective when used in an environment for forming a polymer electrolyte fuel cell containing sulfuric acid or hydrofluoric acid. However, these nickel-base alloys are not limited only to use under such circumstances, and also undergo very little leaching of metal ions in an environment for forming a polymer electrolyte fuel cell containing formic acid. Furthermore, in addition to use in polymer electrolyte fuel cells, the inventive metal-base alloys can also be used to make components for drug manufacturing equipment from which the leaching of metal ions cannot be tolerated.

## Claims

1. A polymer electrolyte fuel cell including a structural member, wherein the structural member is made of
a nickel-base alloy comprising, by mass, more than 43% and not more than 50% chromium, 0.1 to 2% molybdenum, 0.001 to 0.05% magnesium, 0.001 to 0.04% nitrogen, 0.05 to 0.5% manganese, and optionally one or both of iron and silicon in an amount of 0.05 to 1.0 % iron and 0.01 to 0.1 % silicon,
with the balance being nickel and inadvertent impurities, the amount of carbon included in the alloy as inadvertent impurities being not more than 0.05%.

2. The polymer electrolyte fuel cell according to claim 1, wherein the nickel-alloy comprises one or both of iron and silicon in an amount of 0.05 to 1.0 % iron and 0.01 to 0.1 % silicon.

3. The polymer electrolyte fuel cell according to claim 1 or 2, wherein the structural member is a manifold member.

4. The polymer electrolyte fuel cell according to claim 1 or 2, wherein the structural member is a pipe member.

5. The polymer electrolyte fuel cell according to claim 1 or 2, wherein the structural member is a fastener member.

6. The polymer electrolyte fuel cell according to claim 1 or 2, wherein the structural member is a support plate member.

7. The polymer electrolyte fuel cell according to claim 1 or 2, wherein the structural member is a separator member.

8. The polymer electrolyte fuel cell according to any of the claims 1 to 7, wherein
(i) the polymer electrolyte fuel cell comprises plural unit cells which have a solid electrolyte membrane, a first platinum catalyst, a second platinum catalyst, a hydrogen electrode and an oxygen electrode;
(ii) the first platinum catalyst is provided on one side of the solid electrolyte membrane and the second platinum catalyst is provided on the other side of the solid electrolyte membrane; and
(iii) the hydrogen electrode is provided outside of the first platinum catalyst, and the oxygen electrode is provided outside of the second platinum catalyst.

9. The polymer electrolyte fuel cell according to claim 8, wherein the solid electrolyte membrane is a membrane wherein sulfonation treatment or fluorination treatment is conducted.

10. The polymer electrolyte fuel cell according to claim 8, wherein the fuel cell further comprises a manifold, which receives water generated on the oxygen electrode side of the solid electrolyte membrane, a pipe which passes the water from the manifold to a pump, and the pump which feeds the received water to the hydrogen electrode side of the solid electrolyte membrane.

11. The polymer electrolyte fuel cell according to claim 8, wherein the plural cell units are stacked together with intervening separators, and a support plate and fasteners are also used for stacking the unit cells.

12. Use of a nickel-base alloy comprising, by mass, more than 43% and not more than 50% chromium, 0.1 to 2% molybdenum, 0.001 to 0.05% magnesium, 0.001 to 0.04% nitrogen, and 0.05 to 0.5% manganese, and optionally one or both of iron and silicon in an amount of 0.05 to 1.0 % iron and 0.01 to 0.1 % silicon,
with the balance being nickel and inadvertent impurities, the amount of carbon included in the alloy as inadvertent impurities being not more than 0.05%,
for a member of a polymer electrolyte fuel cell.

13. The use of claim 12, wherein the nickel-base alloy comprises one or both of iron and silicon in an amount of 0.05 to 1.0 % iron and 0.01 to 0.1 % silicon.

## Patentansprüche

1. Polymerelektrolyt-Brennstoffzelle, welche ein Strukturelement enthält, wobei das Strukturelement hergestellt ist aus
einer Legierung auf Nickel-Basis, welche nach Gewicht umfasst: mehr als 43 % und nicht mehr als 50 % Chrom, 0,1 bis 2 % Molybdän, 0,001 bis 0,05 % Magnesium, 0,001 bis 0,04 % Stickstoff, 0,05 bis 0,5 % Mangan, und gegebenenfalls eines oder beide von Eisen und Silizium in einer Menge von 0,05 bis 1,0 % Eisen und 0,01 bis 0,1 % Silizium,
wobei der Rest Nickel und unbeabsichtigte Verunreinigungen sind, und wobei die Menge an in der Legierung als unbeabsichtigte Verunreinigungen enthaltenem Kohlenstoff nicht größer ist als 0,05%.

2. Polymerelektrolyt-Brennstoffzelle nach Anspruch 1 , wobei die NickelLegierung eines oder beide von Eisen und Silizium in einer Menge von 0,05 bis 1 ,0 % Eisen und 0,01 bis 0,1 % Silizium enthält.

3. Polymerelektrolyt-Brennstoffzelle nach Anspruch 1 oder 2, wobei das Strukturelement eine Sammelleitungselement ist.

4. Polymerelektrolyt-Brennstoffzelle nach Anspruch 1 oder 2, wobei das Strukturelement ein Leitungselement ist.

5. Polymerelektrolyt-Brennstoffzelle nach Anspruch 1 oder 2, wobei das Strukturelement ein Befestigungselement ist.

6. Polymerelektrolyt-Brennstoffzelle nach Anspruch 1 oder 2, wobei das Strukturelement ein Trägerplattenelement ist.

7. Polymerelektrolyt-Brennstoffzelle nach Anspruch 1 oder 2, wobei das Strukturelement ein Separatorelement ist.

8. Polymerelektrolyt-Brennstoffzelle nach einem der Ansprüche 1 bis 7, wobei
(i) die Polymerelektrolyt-Brennstoffzelle mehrere Einheitszellen umfasst, welche eine feste Elektrolyt-Membran, einen ersten Platinkatalysator, einen zweiten Platinkatalysator, eine Wasserstoffelektrode und eine Sauerstoffelektrode aufweisen;
(ii) der erste Platinkatalysator auf einer Seite der festen Elektrolyt-Membran vorgesehen ist und der zweite Platinkatalysator auf der anderen Seite der festen Elektrolyt-Membran vorgesehen ist; und
(iii) die Wasserstoffelektrode außerhalb des ersten Platinkatalysators vorgesehen ist, und die Sauerstoffelektrode außerhalb des zweiten Platinkatalysators vorgesehen ist.

9. Polymerelektrolyt-Brennstoffzelle nach Anspruch 8, wobei die feste Elektrolyt-Membran eine Membran ist, bei der eine Sulfonierungsbehandlung oder Fluorierungsbehandlung durchgeführt wird.

10. Polymerelektrolyt-Brennstoffzelle nach Anspruch 8, wobei die Brennstoffzelle darüber hinaus ein Sammelleitungselement umfasst, welches Wasser aufnimmt, das auf der Sauerstoffelektrolytseite der festen Elektrolyt-Membran gebildet wird, eine Leitung, welche das Wasser von dem Sammelleitungselement an eine Pumpe weiterleitet, und die Pumpe, die das aufgenommene Wasser der Wasserstoffelektrodenseite der festen Elektrolyt-Membran zuführt,

11. Polymerelektrolyt-Brennstoffzelle nach Anspruch 8, wobei die mehreren Zelleinheiten mit dazwischenliegenden Separatoren aufeinander gestapelt sind, und ebenfalls eine Trägerplatte und Befestigungsmittel zum Aufeinanderstapeln der Zelleinheiten verwendet werden.

12. Verwendung einer Legierung auf Nickelbasis, welche nach Gewicht mehr als 43 % und nicht mehr als 50 % Chrom, 0, 1 bis 2 % Molybdän, 0,001 bis 0,05 % Magnesium, 0,001 bis 0,04 % Stickstoff und 0,05 bis 0,5 % Mangan, und gegebenenfalls eines oder beide von Eisen und Silizium in einer Menge von 0,05 bis 1,0 % Eisen und 0,01 bis 0,1 % Silizium umfasst,
wobei der Rest Nickel und unbeabsichtigte Verunreinigungen sind, wobei die Menge an in der Legierung als unbeabsichtigte Verunreinigungen enthaltenem Kohlenstoff nicht größer ist als 0,05 %,
für ein Element einer Polymerelektrolyt-Brennstoffzelle.

13. Verwendung nach Anspruch 12, wobei die Legierung auf Nickelbasis eines oder beide von Eisen und Silizium in einer Menge von 0,05 bis 1,0 % Eisen und 0,01 bis 0,1 % Silizium enthält.

## Revendications

1. Pile à combustible à électrolyte polymère incluant un membre structurel dans laquelle le membre structurel est fait
d'un alliage à base de nickel comprenant, par rapport à la masse, plus de 43 % et moins de 50 % de chrome, 0,1 à 2 % de molybdène, 0,001 à 0,05 % de magnésium, 0,001 à 0,04 % de nitrogène, 0,05 à 0,05 % de manganèse, et en option du fer et/ou du silicium à hauteur de 0,05 à 1,0 % pour le fer et 0,01 à 0,1 % pour le silicium,
la balance étant le nickel et les impuretés accidentelles, la teneur en carbone incluse dans l'alliage en tant qu'impuretés accidentelles ne dépassant pas 0,05 %.

2. Pile à combustible à électrolyte polymère selon la revendication 1 dans laquelle l'alliage de nickel comprend du fer et/ou du silicium à hauteur de 0,05 à 1 % pour le fer et 0,01 à 0,1 % pour le silicium.

3. Pile à combustible à électrolyte polymère selon la revendication 1 ou 2 dans laquelle le membre structurel est un membre distributeur.

4. Pile à combustible à électrolyte polymère selon la revendication 1 ou 2 dans laquelle le membre structurel est membre de tuyau.

5. Pile à combustible à électrolyte polymère selon la revendication 1 ou 2 dans laquelle le membre structurel est un membre de fixation.

6. Pile à combustible à électrolyte polymère selon la revendication 1 ou 2 dans laquelle le membre structurel est une plaque de support.

7. Pile à combustible à électrolyte polymère selon la revendication 1 ou 2 dans laquelle le membre structurel est un membre séparateur.

8. Pile à combustible à électrolyte polymère selon l'une des revendications 1 ou 7 dans laquelle
(i) la pile à combustible à électrolyte polymère comprend des cellules cristallines qui ont une membrane d'électrolyte solide, un premier catalyseur de platine, un seconde catalyseur de platine, une électrode à hydrogène et une électrode à oxygène,
(ii) le premier catalyseur de platine est fourni sur l'un des côtés de la membrane d'électrolyte solide et le seconde catalyseur de platine est fourni de l'autre côté de la membrane d'électrolyte solide ; et
(iii) l'électrode à hydrogène est fournie en dehors du premier catalyseur de platine et l'électrode à oxygène est fournie en dehors du second catalyseur de platine.

9. Pile à combustible à électrolyte polymère selon la revendication 8 dans laquelle la membrane d'électrolyte solide est une membrane dans laquelle un traitement de sulfonation ou un traitement de fluorination est effectué.

10. Pile à combustible à électrolyte polymère selon la revendication 8 dans laquelle la cellule à combustible comprend un distributeur qui reçoit l'eau générée sur le côté de l'électrode à oxygène de la membrane d'électrolyte solide, un tuyau qui fait passer l'eau du distributeur à une pompe et la pompe qui alimente le côté de l'électrode à hydrogène de la membrane d'électrolyte solide avec l'eau reçue.

11. Pile à combustible à électrolyte polymère selon la revendication 8 dans laquelle les unités cristallines sont superposées ensemble avec les séparateurs intervenant et une plaque de support et les fixateurs sont également utilisés pour empiler les cellules cristallines.

12. Utilisation d'un alliage à base de nickel, comprenant, par rapport à la masse, plus de 43 % et moins de 50 % de chrome, 0,1 à 2 % de molybdène, 0,001 à 0,05 % de magnésium, 0,001 à 0,04 % de nitrogène, 0,05 à 0,05 % de manganèse, et en option du fer et/ou du silicium à hauteur de 0,05 à 1,0 % pour le fer et 0,01 à 0,1 % pour le silicium,
la balance étant le nickel et les impuretés accidentelles, la teneur en carbone incluse dans l'alliage en tant qu'impuretés accidentelles ne dépassant pas 0,05 %,
pour un membre d'une cellule à combustible électrolyte polymère.

13. Utilisation de la revendication 12 dans laquelle l'alliage à base de nickel comprend du fer ou du silicium à hauteur de 0,05 à 1,0 % pour le fer et 0,01 à 0,1 % pour le silicium.
